# FASCICULE DE BREVET EUROPEEN

(11) **EP 0 390 663 B1**
(45) Date de publication et mention de la délivrance du brevet: **19.10.1994**
(21) Numéro de dépôt: 90400812.5
(22) Date de dépôt: 23.03.1990
(51) Int. Cl.: H01S 3/101, G02F 1/29, H01S 3/30

(54) **Cellule de déflexion pour faisceaux laser de puissance**
Ablenkungszelle für Hochleistungs-Laserstrahlen
Deflection unit for high power laser beams

(30) Priorité: 31.03.1989 FR 8904259
(43) Date de publication de la demande: 03.10.1990
(73) Titulaire: THOMSON-CSF, 75008 Paris (FR)
(72) Inventeur: Ayral, Jean-Luc, F-92045 Paris la Défense (FR); Huignard, Jean-Pierre, F-92045 Paris la Défense (FR)
(74) Mandataire: Guérin, Michel

(56) Documents cités:
- EP-A- 0 067 082
- EP-A- 0 292 353

## Description

La présente invention concerne les cellules de déflexion pour faisceaux laser, essentiellement pour faisceaux laser de puissance, c'est-à-dire les moyens commandables qui permettent de dévier ces faisceaux d'un angle donné.

Dans de nombreux domaines, par exemple la télémétrie et le guidage d'engins, on utilise, comme élément de référence, un faisceau laser dont la cohérence aussi bien temporelle que spatiale permet de définir un "trait fin et immatériel" sur un trajet relativement important.

En effet, par exemple pour le guidage d'engins terrestres sur des distances de l'ordre de quelques centaines de mètres, on utilise par exemple un générateur laser du type "hélium-néon" de quelques milliwatts de puissance. Le faisceau défini par ce type de générateur est suffisamment fin pour être utilisé comme référence pour guider ou télémétrer, et le générateur lui-même est suffisamment petit pour permettre de résoudre facilement le problème posé par l'obligation d'effectuer des changements d'orientation du faisceau émis, parfois pour des valeurs d'angles importantes. Pour cela, il suffit, par exemple, de monter le générateur laser sur une platine apte à être déplacée au moyen de moteurs suivant deux ou trois axes. Cette mise en oeuvre donne bien entendu le résultat souhaité, mais à condition que la vitesse de déplacement angulaire nécessaire ne soit pas très importante.

Notamment pour le guidage d'engins terrestres devant se déplacer rapidement, il a été réalisé des cellules de déflexion qui sont disposées sur le faisceau laser lui-même, en sortie du générateur laser, et commandées, par exemple électriquement, comme les déflecteurs statiques acousto-optiques bien connus des hommes de l'art. L'avantage de ce type de déflecteurs est qu'ils répondent très rapidement aux ordres de déflexion qui leur sont donnés. Ils présentent par contre un inconvénient majeur, celui de ne pouvoir dévier que des faisceaux laser de faible puissance. En effet, dans le cas de la déviation de faisceaux de puissance, les déflecteurs sont très rapidement détériorés par le faisceau laser lui-même et, en plus, leur efficacité décroît lorsque l'angle de déviation augmente. En particulier, la puissance du faisceau dévié diminue.

Le document EP-A-0 292 353 concerne un dispositif pour amplifier un faisceau dont on peut modifier la direction.

La présente invention a pour but de réaliser une cellule de déflexion pour faisceau laser, comportant :
- des moyens de déflexion pour dévier un faisceau laser de faible puissance, et
- des moyens pour faire coopérer, dans un milieu non-linéaire de diffusion Brillouin, le faisceau de faible puissance dévié, avec un faisceau laser de pompe de forte puissance formant avec ledit faisceau dévié un angle non nul ;

caractérisé par le fait que ledit faisceau de pompe et le faisceau de faible puissance sont délivrés par un seul générateur laser délivrant en sortie un faisceau de forte puissance dirigé sur lesdits moyens de déflexion, lesdits moyens de déflexion en déviant une partie constituant le faisceau de faible puissance, le faisceau transmis non dévié de forte puissance constituant le faisceau de pompe.

L'invention concerne également une cellule de déflexion pour faisceau laser, comportant :
- des moyens de déflexion pour dévier un faisceau laser incident de faible puissance, et
- des moyens pour faire coopérer, dans un milieu non-linéaire de diffusion Brillouin, le faisceau incident de faible puissance dévié, avec un faisceau laser de pompe de forte puissance formant avec ledit faisceau dévié un angle non nul ;

caractérisée par le fait que ledit faisceau de pompe est fourni par un amplificateur laser dit "à double passage", et pour lequel le faisceau laser à amplifier est celui émis par un générateur laser pilote,
le générateur laser pilote délivrant en sortie un seul faisceau dirigé vers une lame semi-réfléchissante, la lame permettant de coupler une première partie du faisceau de sortie constituant ledit faisceau laser incident de faible puissance et de laisser passer une seconde partie constituant ledit faisceau laser à amplifier.

D'autres caractéristiques et avantages de la présente invention apparaîtront au cours de la description suivante donnée en regard des dessins annexés à titre illustratif, mais nullement limitatif, dans lesquels :

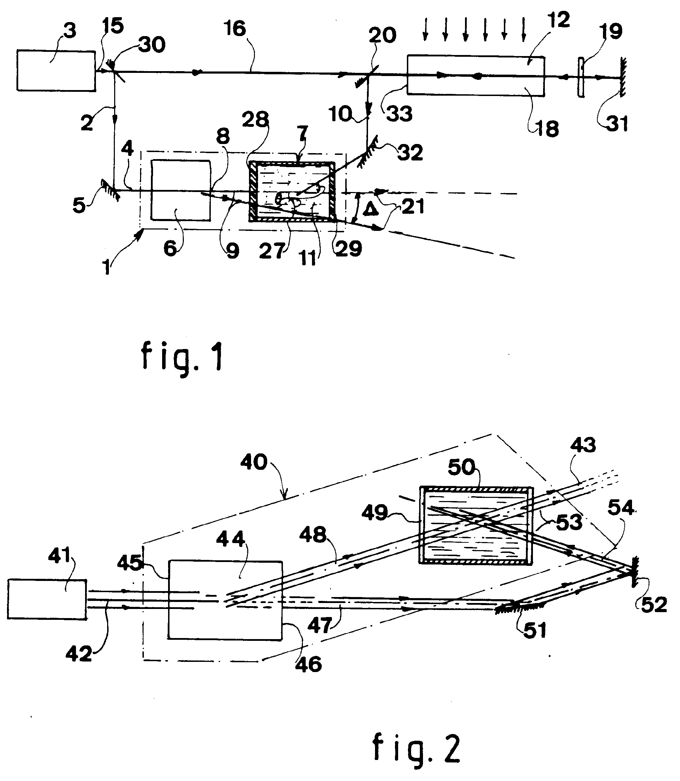

Les figures 1 et 2 représentent un mode de réalisation d'une cellule déflectrice selon l'invention, respectivement dans deux exemples d'application à la déflexion d'un faisceau laser de forte puissance.

En revenant plus particulièrement à la figure 1, celle-ci représente une cellule 1 selon l'invention, apte à recevoir un faisceau laser incident 2 de faible puissance émis par un générateur laser 3 dit "pilote". Le faisceau incident 2 est dirigé vers la fenêtre d'entrée 4 de la cellule au moyen, par exemple, de miroirs de renvoi du type "à réflexion totale" 5.

La cellule comprend des moyens 6 pour dévier le faisceau laser incident, à la commande et dans un angle donné "Δ". Ces moyens pour dévier peuvent être constitués par un déflecteur du type "acousto-optique" connu en lui-même et très schématiquement constitué par un cristal à base de Niobate de Lithium (LiNbO₃) ou d'Oxyde Tellure (TeO₂) sur lequel sont appliquées des électrodes conductrices alimentées par des générateurs électriques haute tension. Ce type de déflecteur connu en lui-même ne sera pas plus amplement décrit ici.

La cellule de déflexion comporte en outre des moyens 7 pour faire coopérer le faisceau dévié 9, en sortie 8 du déflecteur 6, avec un faisceau de pompe 10 de haute puissance faisant avec le faisceau dévié 9 un angle non nul "ϑ", cette interaction étant effectuée dans un milieu 11 non linéaire permettant la génération, par exemple, d'une diffusion Brillouin stimulée. Ce milieu non linéaire 11 peut être constitué d'un gaz tel que du Méthane (CH₄), du Xénon, de l'Hexafluorure de Soufre (SF₆), ou d'un liquide tel que du Sulfure de Carbone (CS₂), de l'Acétone, etc. contenu dans une enveloppe étanche 27 comportant, sur les chemins optiques possibles des faisceaux dévié 9 et de pompe 10, deux fenêtres 28, 29 optiquement transparentes aux longueurs d'onde des deux faisceaux. Lorsque les deux faisceaux lasers sont dans le domaine de la lumière visible, ces fenêtres optiques sont, par exemple en verre.

Dans l'exemple d'application illustré sur la figure 1, le faisceau de pompe 10 est fourni par un amplificateur laser 12 dit "à double passage", et pour lequel le faisceau laser à amplifier est celui émis par le générateur laser pilote 3.

Dans cette configuration, le laser pilote 3 est couplé à l'entrée de l'amplificateur 12 par une lame 30, dans ce cas semi-réfléchissante, permettant de dévier une première partie 2 du faisceau 15 émis par le laser pilote 3 et de laisser passer une seconde partie 16 du faisceau qui est envoyée sur la fenêtre d'entrée de l'amplificateur 12 comportant notamment un milieu amplificateur laser 18. Ce milieu permet, de façon connue, d'augmenter par amplification stimulée l'énergie du faisceau incident 16. Le faisceau ayant traversé une première fois le milieu 18, traverse une lame quart d'onde 19 qui provoque une rotation de la polarisation du faisceau. A la sortie de cette lame quart d'onde, le faisceau se réfléchit sur un miroir 31 classique ou à pseudo conjugaison de phase, pour être renvoyé dans le milieu amplificateur laser 18 après avoir à nouveau traversé la lame quart d'onde 19.

Le faisceau obtenu à la sortie 33 du milieu amplificateur 18 est dévié par un séparateur de polarisation 20 qui donne naissance au faisceau de pompe 10 défini précédemment.

Ce faisceau est dirigé, notamment par des miroirs à réflexion totale 32, vers la fenêtre de sortie 29 de l'enveloppe 11 pour pouvoir coopérer avec le faisceau 9 obtenu à la sortie 8 du déflecteur commandable 6.

Cette configuration permet de transférer l'énergie du faisceau de pompe 10 vers le faisceau pilote 2, à condition cependant que ces faisceaux et la géométrie d'interaction remplissent les conditions de densité d'énergie permettant de dépasser le seuil de l'effet Brillouin. On peut ainsi obtenir une amplification du faisceau pilote de plusieurs dizaines de dB, si les fréquences des deux faisceaux sont décalées l'une par rapport à l'autre d'une quantité intrinsèque au milieu d'interaction, de l'ordre de quelques centaines de MHz pour un milieu gazeux et de quelques GHz pour un milieu liquide. Or, ce décalage entre les fréquences des deux faisceaux est réalisé par le décalage Doppler induit sur le faisceau en sortie du modulateur acousto-optique, ce qui constitue l'un des avantages de la présente invention.

Un autre avantage essentiel du dispositif de déflexion décrit ci-dessus réside dans le fait que le faisceau 21 obtenu en sortie de la cellule 1 présente une puissance importante quelle que soit la valeur de l'angle de déviation qui lui a été imposé, tout en gardant les qualités intrinsèques du faisceau incident pilote 2, étant donné que seule la puissance du faisceau de pompe 10 est transmise au faisceau pilote.

La figure 2 représente une autre application d'une cellule de déflexion 40 selon l'invention, dans laquelle il est utilisé un seul générateur laser 41 délivrant en sortie un faisceau 42 de forte puissance, mais donnant malgré tout un faisceau 43 dévié ayant toutes les qualités mentionnées ci-avant.

Dans ce mode d'application, le déflecteur de type acousto-optique 44 reçoit, sur son entrée 45, le faisceau de forte puissance 42 émis par le générateur 41 et en dévie une partie 48. Bien entendu, la puissance du faisceau incident 42 sera déterminée pour que l'élément constitutif essentiel du déflecteur acousto-optique ne soit pas détérioré.

Ce déflecteur 44 donne à sa sortie 46 deux faisceaux, un faisceau transmis non dévié de forte puissance 47 et un faisceau dévié 48 de faible puissance qui est dirigé vers l'entrée 49 d'une enveloppe 50 telle que décrite ci-avant en regard de la figure 1, référencée 11. Le faisceau 47 de forte puissance non dévié est, lui, repris par des miroirs de renvoi tels que les miroirs de conjugaison 51, 52, pour qu'il puisse pénétrer par la fenêtre de sortie 53 de l'enveloppe et former le faisceau de pompe 54 tel que défini ci-avant sous la référence 10 sur la figure 1.

La cellule 40 présente les mêmes avantages que ceux qui ont été mentionnés pour la cellule 1 décrite en regard de la figure 1, et qui ne seront pas rappelés ici. Elle présente en outre, par rapport au dispositif précédent, un avantage supplémentaire non négligeable : celui de limiter le nombre des moyens pour l'élaboration des faisceaux incident et de pompe à un seul générateur laser.

## Revendications

1. Cellule de déflexion (40) pour faisceau laser, comportant :
- des moyens de déflexion (44) pour dévier un faisceau laser (48) de faible puissance, et
- des moyens (50) pour faire coopérer, dans un milieu non-linéaire (11) de diffusion Brillouin, le faisceau de faible puissance dévié (48), avec un faisceau laser de pompe (54) de forte puissance formant avec ledit faisceau dévié un angle non nul ;
caractérisée par le fait que ledit faisceau de pompe (54) et le faisceau de faible puissance dévié (48) sont délivrés par un seul générateur laser (41) délivrant en sortie un faisceau (42)de forte puissance dirigé sur lesdits moyens de déflexion, lesdits moyens de déflexion en déviant une partie (48) constituant le faisceau laser de faible puissance, le faisceau transmis non dévié de forte puissance (47) constituant le faisceau de pompe (54).

2. Cellule de déflexion (1) pour faisceau laser, comportant :
- des moyens de déflexion (6) pour dévier un faisceau laser incident (2) de faible puissance, et
- des moyens (7) pour faire coopérer, dans un milieu non-linéaire (11) de diffusion Brillouin, le faisceau incident de faible puissance dévié (9), avec un faisceau laser de pompe (10) de forte puissance formant avec ledit faisceau dévié un angle non nul ;
caractérisée par le fait que ledit faisceau de pompe (10) est fourni par un amplificateur laser (12) dit "à double passage", et pour lequel le faisceau laser à amplifier est celui émis par un générateur laser pilote (3),
le générateur laser pilote (3) délivrant en sortie un seul faisceau (15) dirigé vers une lame semi-réfléchissante (30), la lame permettant de coupler une première partie (2) du faisceau de sortie (15) constituant ledit faisceau laser incident (2) de faible puissance, et de laisser passer une seconde partie (16) constituant ledit faisceau laser à amplifier (16).

3. Cellule selon la revendication 1 ou 2, caractérisé par le fait que lesdits moyens de déflexion (6, 44) pour dévier le faisceau laser de faible puissance sont constitués par un déflecteur du type "acousto-optique".

4. Cellule selon la revendication 3, caractérisée par le fait que lesdits moyens de déflexion sont constitués par un cristal à base de Niobate de Lithium (LiNbO₃) ou d'Oxyde de Tellure (TeO₂).

5. Cellule selon l'une des revendications précédentes, caractérisée par le fait que ledit milieu non linéaire (11) est constitué d'un gaz tel que du Méthane (CH₄), du Xénon, de l'Hexafluorure de Soufre (SF₆), ou d'un liquide tel que du Sulfure de Carbone (CS₂), de l'Acétone.

6. Cellule selon la revendication 5, caractérisée par le fait que lesdits moyens (7, 50) pour faire coopérer le faisceau dévié (9, 48), avec le faisceau de pompe (10, 54) de haute puissance faisant avec le faisceau dévié (9, 48) un angle non nul dans le milieu non-linéaire (11) comportent une enveloppe étanche (27, 50) comportant, sur les chemins optiques possibles des faisceaux dévié (9, 48) et de pompe (10, 54), deux fenêtres (28, 29 49, 53) optiquement transparentes aux longueurs d'onde des deux faisceaux.

7. Cellule selon la revendication 2 ou l'une des revendications 3 à 6 dans le cas où elles dépendent de la revendication 2, caractérisée par le fait que ledit faisceau de sortie (15) est couplé à l'entrée de l'amplificateur (12) par la lame semi-réfléchissante (30), l'amplificateur laser (12) comprenant, sur un axe optique, au moins un milieu amplificateur laser (18), une lame quart d'onde (19) et un miroir réfléchissant (31), ledit amplificateur laser (12) comportant en outre un séparateur de polarisation (20) disposé entre la lame semi-réfléchissante et le milieu amplificateur laser.

## Patentansprüche

1. Ablenkungszelle (40) für einen Laserstrahl, mit:
- Ablenkmitteln (44), um einen Laserstrahl (48) geringer Leistung abzulenken, und
- Mitteln (50), um in einem nichtlinearen Brillouin-Diffusions-Medium (11) den abgelenkten Strahl (48) geringer Leistung mit einem Pumplaserstrahl (54) hoher Leistung zusammenwirken zu lassen, der mit dem abgelenkten Strahl einen von Null verschiedenen Winkel einschließt;
dadurch gekennzeichnet, daß der Pumpstrahl (54) und der abgelenkte Strahl (48) geringer Leistung von einer einzigen Laserquelle (41) geliefert werden, die am Ausgang einen Strahl (42) hoher Leistung liefert, der auf die Ablenkmittel gerichtet ist, wobei die Ablenkmittel durch Ablenken eines Teils (48) den Laserstrahl geringer Leistung bilden, wobei der nicht abgelenkte, übertragene Strahl (47) hoher Leistung den Pumpstrahl (54) bildet.

2. Ablenkungszelle (1) für einen Laserstrahl, mit:
- Ablenkmitteln (6), um einen einfallenden Laserstrahl (2) geringer Leistung abzulenken, und
- Mitteln (7), um in einem nichtlinearen Brillouin-Diffusions-Medium (11) den einfallenden abgelenkten Strahl (9) geringer Leistung mit einem Pumplaserstrahl (10) hoher Leistung zusammenwirken zu lassen, der mit dem abgelenkten Strahl einen von Null verschiedenen Winkel einschließt;
dadurch gekennzeichnet, daß der Pumpstrahl (10) von einem Laserverstärker (12) bereitgestellt wird, der Laserverstärker "mit doppeltem Durchgang" genannt wird und für den der zu verstärkende Laserstrahl der von einer Pilotlaserquelle (3) abgegebene Strahl ist;
wobei die Pilotlaserquelle (3) am Ausgang einen einzigen Strahl (15) liefert, der zu einem halbreflektierenden Plättchen (30) gerichtet ist, wobei das Plättchen das Abspalten eines den einfallenden Laserstrahl (2) geringer Leistung bildenden ersten Teils (2) des Ausgangsstrahls (15) und das Durchlassen eines zweiten Teils (16) ermöglicht, der den zu verstärkenden Laserstrahl (16) bildet.

3. Zelle nach Anspruch 1 oder 2, dadurch gekennzeichnet, daß die Ablenkmittel (6, 44) zum Ablenken des Laserstrahls geringer Leistung durch eine "akusto-optische" Ablenkvorrichtung gebildet sind.

4. Zelle nach Anspruch 3, dadurch gekennzeichnet, daß die Ablenkmittel durch einen Kristall auf Basis von Lithiumniobat (LiNbO₃) oder Telluroxid (TeO₂) gebildet sind.

5. Zelle nach einem der vorangehenden Ansprüche, dadurch gekennzeichnet, daß das nichtlineare Medium (11) aus einem Gas wie Methan (CH₄), Xenon, Schwefelhexafluorid (SF₆) oder einer Flüssigkeit wie Schwefelkohlenstoff (CS₂) oder Aceton gebildet ist.

6. Zelle nach Anspruch 5, dadurch gekennzeichnet, daß die Mittel (7, 50), die den abgelenkten Strahl (9, 48) mit dem Pumpstrahl (10, 54) hoher Leistung, der mit dem abgelenkten Strahl (9, 48) einen von Null verschiedenen Winkel einschließt, in dem nichtlinearen Medium (11) zusammenwirken lassen, ein dichtes Gehäuse (27, 50) enthalten, das auf den möglichen Lichtwegen des abgelenkten Strahls (9, 48) und des Pumpstrahls (10, 54) zwei Fenster (28, 29; 49, 53) enthält, die für die Wellenlängen der beiden Strahlen optisch durchlässig sind.

7. Zelle nach Anspruch 2 oder nach einem der Ansprüche 3 bis 6 für den Fall, daß sie vom Anspruch 2 abhängen, dadurch gekennzeichnet, daß der Ausgangsstrahl (15) mit dem Eingang des Verstärkers (12) über ein halbreflektierendes Plättchen (30) gekoppelt ist, wobei der Laserverstärker (12) auf einer optischen Achse wenigstens ein Laserverstärkungsmedium (18), ein Viertelwellenlängenplättchen (19) sowie einen reflektierenden Spiegel (31) enthält, wobei der Laserverstärker (12) außerdem eine Polarisations-Trennvorrichtung (20) enthält, die zwischen dem halbreflektierenden Plättchen und dem Laserverstärkungsmedium angeordnet ist.

## Claims

1. Deflection cell (40) for a laser beam, including:
- deflection means (44) for deflecting a low-power laser beam (48) and
- means (50) for causing the deflected low-power beam (48) to interact, in a non-linear Brillouin scattering medium (11), with a high-power pump laser beam (54) making a non-zero angle with the said deflected beam;
characterized in that the said pump beam (54) and the deflected low-power beam (48) are delivered by a single laser generator (41) delivering, as output, a high-power beam (42) directed onto the said deflection means, the said deflection means deflecting a portion (48) thereof, forming the low-power laser beam, the non-deflected transmitted high-power beam (47) forming the pump beam (54).

2. Deflection cell (1) for a laser beam, including:
- deflection means (6) for deflecting an incident low-power laser beam (2), and
- means (7) for causing the deflected incident low-power beam (9) to interact, in a non-linear Brillouin scattering medium (11), with a high-power pump laser beam (10) making a non-zero angle with the said deflected beam;
characterized in that the said pump beam (10) is supplied by a so-called "double pass" laser amplifier (12) for which the laser beam to be amplified is the one emitted by a pilot laser generator (3),
the pilot laser generator (3) delivering, as output, a single beam (15) directed towards a semi-reflecting plate (30), the plate making it possible to couple a first portion (2) of the output beam (15), forming the said incident low-power laser beam (2), and to allow a second portion (16), forming the said laser beam (16) to be amplified, to pass.

3. Cell according to Claim 1 or 2, characterized in that the said deflection means (6, 44) for deflecting the low-power laser beam are formed by a deflector of the "acoustooptic" type.

4. Cell according to Claim 3, characterized in that the said deflection means are formed by a crystal based on Lithium Niobate (LiNbO₃) or Tellurium Oxide (TeO₂).

5. Cell according to one of the preceding claims, characterized in that the said non-linear medium (11) consists of a gas such as Methane (CH₄), Xenon, Sulphur Hexafluoride (SF₆), or a liquid such as Carbon Disulphide (CS₂), or Acetone.

6. Cell according to Claim 5, characterized in that the said means (7, 50) for causing the deflected beam (9, 48) to interact, in the non-linear medium (11), with the high-power pump beam (10, 54) making a non-zero angle with the deflected beam (9, 48) include a leaktight casing (27, 50) which includes, in the possible optical paths of the deflected (9, 48) and pump (10, 54) beams, two windows (28, 29; 49, 53) which are optically transparent at the wavelengths of the two beams.

7. Cell according to Claim 2 or one of Claims 3 to 6 in the case where they are dependent on Claim 2, characterized in that the said output beam (15) is coupled to the input of the amplifier (12) by the semi-reflecting plate (30), the laser amplifier (12) comprising, on one optical axis, at least one laser amplifying medium (18), a quarter-wave plate (19) and a reflecting mirror (31), the said laser amplifier (12) furthermore including a polarization splitter (20) arranged between the semi-reflecting plate and the laser amplifying medium.
